(19) Europäisches Patentamt
European Patent Office
Office européen des brevets

(11) Veröffentlichungsnummer : **0 114 208**
**B2**

(12) **NEUE EUROPÄISCHE PATENTSCHRIFT**

(45) Veröffentlichungstag der neuen Patentschrift : **06.07.88**

(51) Int. Cl.⁴ : **C 08 G 63/54**, C 09 D 3/48

(21) Anmeldenummer : **83110810.5**

(22) Anmeldetag : **28.10.83**

(54) **Verwendung von ungesättigten Polyestern als haftverbessernde Zusatzbindemittel in Überzugsmitteln zur Oberflächenbeschichtung von Metallen.**

(30) Priorität : **28.12.82 DE 3248325**

(43) Veröffentlichungstag der Anmeldung : **01.08.84 Patentblatt 84/31**

(45) Bekanntmachung des Hinweises auf die Patenterteilung : **05.03.86 Patentblatt 86/10**

(45) Bekanntmachung des Hinweises auf die Entscheidung über den Einspruch : **06.07.88 Patentblatt 88/27**

(84) Benannte Vertragsstaaten :
**AT BE CH DE FR GB IT LI NL SE**

(56) Entgegenhaltungen :
**DE-A- 2 163 503**
**DE-B- 2 260 377**
**FR-A- 1 530 782**
**GB-A- 1 175 826**
**GB-A- 1 319 243**
**US-A- 3 340 136**
**Produktinformation Phtolopal LR 8686 von August 1982**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Zech, Hans-Joachim, Dr.**
**Freiligrathstrasse 97**
**D-4370 Marl (DE)**
Erfinder : **Dörffel, Jörg, Dr.**
**Bitterfelder Strasse 4**
**D-4370 Marl (DE)**

**EP 0 114 208 B2**

**Beschreibung**

Bei der Oberflächenbeschichtung von Metallen steht neben der dekorativen Funktion die korrosionsschützende, d. h. werterhaltende Funktion im Vordergrund. Unter Korrosionsschutz wird der Schutz gegen Umwelteinflüsse, insbesondere Witterungseinflüsse, Wasser und aggressive Medien (Chemikalien) verstanden. Um diese Funktion zu erfüllen, muß der Überzug gegenüber den Umwelteinflüssen beständig sein. Darüber hinaus muß der Verbund zwischen Überzug und Substrat, d. h. die Haftung des Überzugs auf dem zu schützenden, metallischen Untergrund, insbesondere auf kritischem, metallischem Untergrund, wie beispielsweise verzinktem Stahl, möglichst gut sein.

In Erkenntnis dieser Zusammenhänge hat man Überzugsmitteln auf Basis üblicher Bindemittel ungesättigte Polyester als haftverbessernde Zusatzbindemittel zugesetzt (Oberbegriff von Patentanspruch 1). Ein für diesen Zweck empfohlener, typischer, ungesättigter Polyester ist dadurch charakterisiert, daß die Säurekomponente zu je 50 Mol-% aus Isophthalsäure und Maleinsäureanhydrid und die Alkoholkomponente zu 90 Mol-% aus Neopentylglykol und zu 10 Mol-% aus Propandiol-(1,2) bestehen.

Es hat sich in der Praxis herausgestellt, daß die mit Hilfe der Zusatzbindemittel des Standes der Technik erhaltenen Überzüge hinsichtlich Beständigkeit gegen Umwelteinflüsse, insbesondere hinsichtlich Hydrolysebeständigkeit, verbesserungsbedürftig sind.

Die Aufgabe der Erfindung ist es, Zusatzbindemittel bereitzustellen, welche es gestatten, nicht nur die Haftung der mit ihrer Hilfe erhaltenen Überzüge auf dem zu schützenden, metallischen Untergrund zu verbessern sondern auch die Beständigkeit der Überzüge gegen Umwelteinflüsse, insbesondere ihre Hydrolysebeständigkeit, zu verbessern. Mit den durch die bereitzustellenden Zusatzbindemittel erhaltenen Überzügen sollen die Voraussetzungen für den Korrosionsschutz von Metallen verbessert werden (gute Haftung der Überzüge auf metallischen, insbesondere kritischen, metallischen Untergründen, und zugleich gute Beständigkeit der Überzüge gegen Umwelteinflüsse, insbesondere gute Hydrolysebeständigkeit), so daß ein verbesserter Korrosionsschutz erwartet werden kann.

Die Aufgabe wurde in überraschender Weise durch die Verwendung der ungesättigten Polyester gemäß Patentanspruch 1 gelöst. Diese Polyester können grundsätzlich als bekannt gelten. Lediglich ihre Vewendung ist Gegenstand der Erfindung.

Der Patentanspruch 1 lautet :

Verwendung von ungesättigten Polyestern als haftverbessernde Zusatzbindemittel in Überzugsmitteln zur Oberflächenbeschichtung von Metallen, wobei die Überzugsmittel übliche Bindemittel enthalten und die Polyester in einer Menge von 1 bis 50 Massen-%, bezogen auf das gesamte Bindemittel, eingesetzt werden und in üblicher Weise durch Polykondensation eines aus einer Isophthalsäure (IPS) enthaltenden Säurekomponente und einer Alkoholkomponente bestehenden Monomerengemisches erhalten sind, dadurch gekennzeichnet, daß

a) die Säurekomponente zu 30 bis 75 Mol-% aus IPS, zu 20 bis 70 Mol-% aus einer oder mehreren alpha, beta-olefinisch ungesättigten Dicarbonsäuren und zu 0 bis 20 Mol-% aus einer anderen oder mehreren anderen Dicarbonsäuren aus der Gruppe der aromatischen und (cyclo)aliphatischen Dicarbonsäuren und

b) die Alkoholkomponente zu 10 bis 90 Mol-% aus Neopentylglykol (NPG) und zu 10 bis 90 Mol-% aus 1,4-Bis-(hydroxymethyl)-cyclohexan (CHDM) und/oder einem technischen Gemisch von Diolen der Formel I

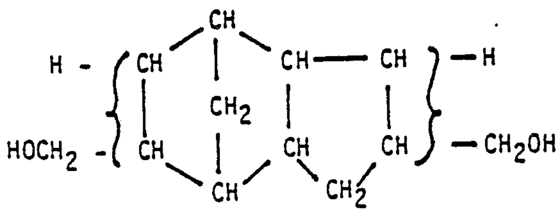

(I)

oder zu 0 bis « 20 Mol-% aus Propandiol-(1,2) und zu » 80 bis 100 Mol-% aus CHDM und/oder einem technischen Gemisch von Diolen der Formel I bestehen und

c) die Polyester eine zahlenmittlere, relative Molekülmasse ($\bar{M}n$) von 2 000 bis 6 000, bestimmt durch Titration der Endgruppen, und eine Säurezahl von 10 bis 50 mg KOH/g aufweisen.

Besonders vorteilhafte Lösungen der Aufgabe wurden durch die Verwendung der ungesättigten Polyester gemäß den Patentansprüchen 2 bis 5 erzielt.

Unter vergleichbaren Bedingungen nimmt die Haftung der Überzüge in der Regel mit zunehmendem IPS-Anteil in der Säurekomponente zu.

Geeignete α,β-olefinisch ungesättigte Dicarbonsäuren sind beispielsweise Itacon-, Mesacon-, Citracon- und besonders Fumarsäure und Maleinsäure (anhydrid).

Eine geeignete andere aromatische Dicarbonsäure ist beispielsweise Phthalsäure (anhydrid).

Geeignete andere cycloaliphatische Dicarbonsäuren sind beispielsweise Hexahydrophthalsäure, Tetrahydrophthalsäure und Hexahydroterephthalsäure.

Geeignete andere aliphatische Dicarbonsäuren sind beispielsweise $C_4$- bis $C_{12}$-Dicarbonsäuren wie Adipin- und Azelainsäure.

In der Regel nimmt die Haftung der Überzüge mit zunehmender Molekülmasse des Polyesters zu.

Die Herstellung der Polyester ist grundsätzlich bekannt. Sie erfolgt durch azeotrope Kondensation oder Schmelzkondensation des Monomorengemisches und zwar in der Regel bei Temperaturen im Bereich von 150 bis 250 °C. Dabei können alle Monomeren zu Beginn der Reaktion vorgelegt und die Reaktion nach Erreichen des gewünschten Umsatzes abgebrochen werden (Methode a).

Vorzugsweise stellt man die Polyester zweistufig her (Methode b). Dabei wird in der ersten Stufe die gesamte Alkoholkomponente mit der IPS soweit umgesetzt, bis ein homogenes Reaktionsgemisch erhalten wird. Anschließend gibt man den Rest der Säurekomponente dazu und kondensiert wie bei der einstufigen Verfahrensvariante weiter.

Im allgemeinen ist das Molverhältnis Alkoholkomponente/Säurekomponente 1 bis 1,06, vorzugsweise 1,01 bis 1,04, zu 1. Die Molekülmasse der Polyester wird im allgemeinen durch dieses Molverhältnis und durch die Säurezahl eingestellt. Sie steigt mit abnehmendem Molverhältnis und abnehmender Säurezahl ; sie fällt mit zunehmendem Molverhältnis und zunehmender Säurezahl. Die Säurezahl beträgt vorzugsweise 15 bis 25 mg KOH/g.

Die Polyester werden vorzugsweise in Mengen von 5 bis 20 Massen-%, bezogen auf das gesamte Bindemittel, eingesetzt.

Die Überzugsmittel enthalten übliche Bindemittel, wie beispielsweise Vinylchloridhomo- oder -copolymerisate, Chlorkautschuk, Nitrocellulose, Celluloseacetobutyrate, Alkydharze, Acrylharze, Polyester, Epoxidharze, Silikonharze oder Polyurethane, wobei die Bindemittel zusätzlich vernetzende Bestandteile, wie beispielsweise Polyisocyanate, Phenolharze und/oder Aminoplaste enthalten können.

Die Überzugsmittel enthalten neben den Bindemitteln übliche Zusätze, wie beispielsweise Lösemittel, Pigmente, Farbstoffe und Füllstoffe sowie übliche Hilfsmittel, wie beispielsweise Verlaufsmittel.

Bei der erfindungsgemäßen Verwendung der Polyester können Überzüge erhalten werden, welche gute mechanische Eigenschaften, guten Glanz und gute Lösemittel- und Fleckenbeständigkeit aufweisen. Oft wird nicht nur die Haftung zum Substrat, sondern auch die Haftung verschiedener Lackschichten untereinander verbessert.

Die Erfindung wird durch die folgenden Beispiele erläutert. Darin bedeuten Teile (T.) Massenteile und Prozente Massenprozente. Die nicht erfindungsgemäßen Vergleichsbeispiele werden mit großen Buchstaben bezeichnet.

## Beispiele

Herstellung der Polyester

### Methode a (Beispiel 1)

539,5 g IPS (3,25 Mol), 318,5 g Maleinsäureanhydrid (MSA, 3,25 Mol), 620,6 g NPG (5,97 Mol) und 95,5 g CHDM (0,66 Mol) wurden zusammengegeben und unter Rühren und Durchleiten von Stickstoff 2 h bei 150 °C und 20 h bei 205 °C erhitzt. Es wurde ein hellgelbes Produkt mit einer Säurezahl (SZ) von 21 mg KOH/g und einer Hydroxylzahl von 19 mg KOH/g erhalten.

$\bar{M}_n$ : 2 800.

### Methode b (Beispiel 5)

539,5 g IPS (3,25 Mol), 516,9 g NPG (4,97 Mol) und 325,4 g eines technischen Gemisches von Diolen der Formel I (Diol I, 1,66 Mol) wurden zusammengegeben und unter Rühren und Durchleiten von Stickstoff 2 h bei 150 °C und 4 h bei 205 °C erhitzt. Das erhaltene Reaktionsgemisch war klar (SZ 21). Nach Abkühlen auf 130 °C wurden 377 g Fumarsäure (FS, 3,25 Mol) hinzugefügt, die Temperatur innerhalb von 3 h auf 205 °C erhöht und diese Temperatur weitere 11 h gehalten. Es wurde ein gelbliches Produkt erhalten (SZ 20, Hydroxylzahl 11, $\bar{M}_n$ : 3 610).

Herstellung der Vinylchlorid-Copolymerisat-Überzugsmittel

97,5 T. eines handelsüblichen Vinylchlorid-Copolymerisates, 10 T. Di-(2-ethylhexyl)-phthalat, 2 T. eines handelsüblichen Epoxidharzes und 10 T. des zu prüfenden Polyesters wurden in einem Lösemittelgemisch aus 49 T. Methylisobutylketon, 67 T. Xylol, 73 T. eines aromatischen Erdöldestillates (Siedebereich 155 bis 173 °C) und 73 T. Ethylglykolacetat mit Hilfe eines Dissolvers gelöst. In diese Lösung wurden 34 T. eines handelsüblichen Verdickers (10 %ig), 2,5 T. einer 1 %igen xylolischen Silikonöl-Lösung, 49 T. eines Titandioxid-Pigmentes, 32,8 T. eines Dolomit-Füllstoffes und 0,25 T. eines Rußes eingetragen. Die erhaltene Mischung wurde 20 min in einer Perlmühle gemahlen.

Herstellung von Überzügen und Prüfung der Haftung

Die Überzugsmittel wurden nach einer Reifezeit von 24 h auf verzinkte Stahlbleche aufgetragen (Schichtdicken nach Lösemittelverdunstung : 50 ± 5 μm). Nach einwöchiger Trocknung bei 50 °C wurde die Haftung durch Bestimmung des Gitterschnitt-Kennwertes nach DIN 53 151 geprüft (Tabelle).

Prüfung der Hydrolysebeständigkeit der Polyester

Die Polyester wurden 50 %ig in Toluol gelöst. Mit den Lösungen wurden Naßfilme auf Glasplatten aufgetragen. Die Filme wurden 16 h bei 50 °C getrocknet. Die Platten mit den erhaltenen transparenten Überzügen wurden 8 d in 10 %iger wäßriger NaOH-Lösung bei Raumtemperatur gelagert und die Überzüge visuell beurteilt (Tabelle).

(Siehe Tabelle Seite 5 f.)

Tabelle

Haftung von Vinylchlorid-Copolymerisat-Überzügen auf verzinkten Stahlblechen Hydrolysebeständigkeit von Polyester-Überzügen auf Glasplatten

| Beispiel | Säurekomponente (Mol-%) | Polyester Alkoholkomponente (Mol-%) | Herstellungs-methode | SZ [mg KOH/g] | $\overline{M}_n$ | GT-Werte der Überzüge | Aussehen der Überzüge nach Einwirkung 10 %iger NaOH-Lösung |
|---|---|---|---|---|---|---|---|
| 1 | IPS/MSA (50/50) | NPG/CHDM (90/10) | a | 21 | 2 800 | 0-1 | |
| 2 | IPS/FS (60/40) | NPG/CHDM (75/25) | b | 17 | 4 200 | 0 | klar |
| 3 | IPS/FS (50/50) | NPG/CHDM (50/50) | b | 20 | 2 600 | 0 | |
| 4 | IPS/FS (50/50) | CHDM (100) | b | 18 | 2 700 | 0 | |
| 5 | IPS/FS (50/50) | NPG/Diol I (75/25) | b | 20 | 3 600 | 0 | klar |
| 6 | IPS/FS (50/50) | NPG/Diol I (67/33) | b | 17 | 4 200 | 1 | klar |
| 7 | IPS/MSA (33/67) | NPG/Diol I (50/50) | b | 20 | 3 100 | 1 | |
| 8 | IPS/MSA (50/50) | NPG/Diol I (50/50) | b | 16 | 4 100 | 0 | |
| 9 | IPS/MSA (67/33) | NPG/Diol I (50/50) | b | 16 | 3 900 | 1 | |
| A | MSA/PSA (67/33) | NPG/Diol I (50/50) | a | 15 | 3 600 | 5 | |
| B | MSA/PSA (67/33) | Diol I (100) | a | 14 | 3 500 | 4 | |
| C | IPS/MSA (50/50) | NPG/CHDM (90/10) | a | 20 | 1 700 | 4 | |
| D | IPS/MSA (50/50) | PG (100) | a | 24 | 3 100 | 1-2 | trüb |
| E | IPS/FS/MSA (50/33/17) | NPG (100) | a | 16 | 3 200 | 1 | trüb |

$\bar{M}_n$ : auf Hunderter gerundet ; GT-Werte = Gitterschnitt-Kennwerte (Beurteilung nach DIN 53 151) ; PG = Propandiol-(1,2) ;
PSA = Phthalsäureanhydrid

**Patentansprüche**

1. Verwendung von ungesättigten Polyestern als haftverbessernde Zusatzbindemittel in Überzugsmitteln zur Oberflächenbeschichtung von Metallen, wobei die Überzugsmittel übliche Bindemittel enthalten und die Polyester in einer Menge von 1 bis 50 Massen-%, bezogen auf das gesamte Bindemittel, eingesetzt werden und in üblicher Weise durch Polykondensation eines aus einer Isophthalsäure (IPS) enthaltenden Säurekomponente und einer Alkoholkomponente bestehenden Monomerengemisches erhalten sind, dadurch gekennzeichnet, daß

a) die Säurekomponente zu 30 bis 75 Mol-% aus IPS, zu 20 bis 70 Mol-% aus einer oder mehreren alpha, beta-olefinisch ungesättigten Dicarbonsäuren und zu 0 bis 20 Mol-% aus einer anderen oder mehreren anderen Dicarbonsäuren aus der Gruppe der aromatischen und (cyclo)aliphatischen Dicarbonsäuren und

b) die Alkoholkomponente zu 10 bis 90 Mol-% aus Neopentylglykol (NPG) und zu 10 bis 90 Mol-% aus 1,4-Bis-(hydroxymethyl)-cyclohexan (CHDM) und/oder einem technischen Gemisch von Diolen der Formel I

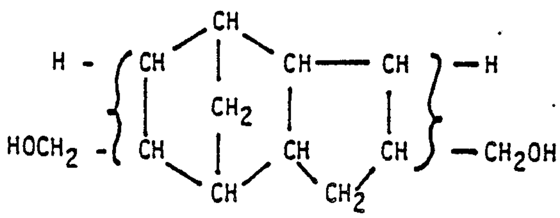

(I)

oder zu 0 bis « 20 Mol-% aus Propandiol-(1,2) und zu » 80 bis 100 Mol-% aus CHDM und/oder einem technischen Gemisch von Diolen der Formel I bestehen und

c) die Polyester eine zahlenmittlere, relative Molekülmasse ($\bar{M}n$) von 2 000 bis 6 000, bestimmt durch Titration der Endgruppen, und eine Säurezahl von 10 bis 50 mg KOH/g aufweisen.

2. Verwendung der ungesättigten Polyester nach Anspruch 1, dadurch gekennzeichnet, daß die Polyester eine Molekülmasse von 2 500 bis 5 000 und eine Säurezahl von 12 bis 30 mg KOH/g aufweisen und in einer Menge von 1 bis 30 Massen-%, bezogen auf das gesamte Bindemittel, eingesetzt werden.

3. Verwendung der ungesättigten Polyester nach Anspruch 1 oder 2, dadurch gekennzeichnet, daß die Säurekomponente zu 30 bis 70 Mol-% aus IPS und zu 30 bis 70 Mol-% aus Fumarsäure und/oder Maleinsäure(anhydrid) besteht.

4. Verwendung der ungesättigten Polyester nach Anspruch 1 oder 2, dadurch gekennzeichnet, daß die Säurekomponente zu 40 bis 60 Mol-% aus IPS und zu 40 bis 60 Mol-% aus Fumarsäure und/oder Maleinsäure(anhydrid) besteht.

5. Verwendung der ungesättigten Polyester nach Anspruch 3 oder 4, dadurch gekennzeichnet, daß die Alkoholkomponente zu 40 bis 90 Mol-% aus NPG und zu 10 bis 60 Mol-% aus CHDM und/oder einem technischen Gemisch von Diolen der Formel I besteht.

**Claims**

1. Use of an unsaturated polyester as an adhesion-promoting additional binder in coating compositions for the surface-coating of metals, the coating compositions containing conventional binders and the polyester being used in a quantity from 1 to 50 % by mass, relative to the total binder, and having been obtained in the conventional manner by polycondensation of a monomer mixture consisting of an acid component containing isophthalic acid (IPA) and an alcohol component, characterized in that

a) the acid component consists to the extent of 30 to 75 mol% of IPA, to the extent of 20 to 70 mol% of one or more alpha, beta-olefinically unsaturated dicarboxylic acids and to the extent of zero to 20 mol% of one other or several other dicarboxylic acids from the group of the aromatic and (cyclo)aliphatic dicarboxylic acids and

b) the alcohol component consists to the extent of 10 to 90 mol% of neopentyl glycol (NPG) and to the extent of 10 to 90 mol% of 1,4-bis-(hydroxymethyl)-cyclohexane (CHDM) and/or a technical mixture of diols of the formula I

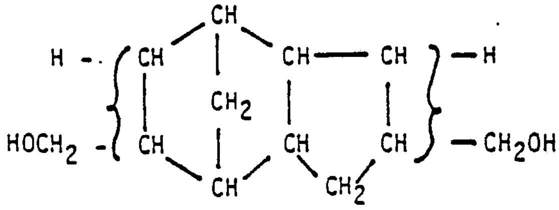

(I)

or consists to the extent of 0 to < 20 mol% of 1,2-propanediol and to the extent of > 80 to 100 mol% of CHDM and/or a technical mixture of diols of the formula I, and

c) the polyester has a number-average relative molecular mass ($\bar{M}n$) from 2 000 to 6 000, determined by end group titration, and an acid number from 10 to 50 mg of KOH/g.

2. Use of the unsaturated polyester according to Claim 1, characterized in that the polyester has a molecular mass from 2 500 to 5 000 and an acid number from 12 to 30 mg of KOH/g and is used in a quantity from 1 to 30 % by mass, relative to the total binder.

3. Use of the unsaturated polyester according to Claim 1 or 2, characterized in that the acid component consists to the extent of 30 to 70 mol% of IPA and to the extent of 30 to 70 mol% of fumaric acid and/or maleic acid or anhydride.

4. Use of the unsaturated polyester according to Claim 1 or 2, characterized in that the acid component consists to the extent of 40 to 60 mol% of IPA and to the extent of 40 to 60 mol% of fumaric acid and/or maleic acid or anhydride.

5. Use of the unsaturated polyester according to Claim 3 or 4, characterized in that the alcohol component consists to the extent of 40 to 90 mol% of NPG and to the extent of 10 to 60 mol% of CHDM and/or a technical mixture of diols of the formula I.

**Revendications**

1. L'utilisation de polyesters non saturés en tant que liants additionnels améliorant l'adhérence d'agents de revêtement pour le revêtement de surfaces de métaux, les agents de revêtements renfermant des liants usuels et les polyesters étant utilisés dans une quantité de 1 à 50 % en masse relativement au liant global et étant obtenus d'une manière usuelle par polycondensation d'un mélange de monomères à base d'un composant acide renfermant de l'acide isophtalique (AIP) et d'un composant alcoolique, caractérisée par le fait que

a) le composant acide est constitué pour 30 à 75 mol% par AIP, pour 20 à 70 mol-% par un ou plusieurs acides dicarboxyliques à insaturation oléfinique en alpha, bêta et pour zéro à 20 mol% par un ou plusieurs autre(s) acide(s) dicarboxyliques du groupe des acides dicarboxyliques aromatiques et (cyclo)-aliphatiques et que

b) le composant alcoolique est constitué pour 10 à 90 mol% par du néopentyl-glycol (NPG) et pour 10 à 90 mol% par du 1,4-bis-(hydroxyméthyl)-cyclohexane (CHDM) et/ou d'un mélange technique de diols de la formule I

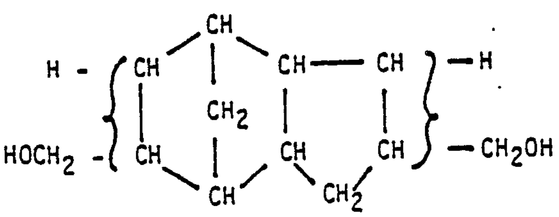

(I)

ou pour zéro à moins de 20 mol% par du propane-diol-(1,2) et pour plus de 80 à 100 mol% par du CHDM et/ou par un mélange technique de diols de la formule I, et que

c) les polyesters présentent une masse moléculaire relative moyenne en nombre ($\bar{M}n$) de 2 000 à 6 000, déterminée par titrage des groupes terminaux, et un indice d'acide de 10 à 50 mg de KOH par gramme.

2. L'utilisation de polyesters insaturés selon la revendication 1, caractérisée par le fait que les polyesters présentent une masse moléculaire de 2 500 à 5 000 et un indice d'acide de 12 à 30 mg de KOH par gramme et qu'ils sont utilisés à raison de 1 à 30 % en masse, relativement au total du liant.

3. L'utilisation des polyesters insaturés selon la revendication 1 ou 2, caractérisée par le fait que le composant acide est formé à raison de 30 à 70 mol% d'AIP et de 30 à 70 mol% d'acide fumarique et/ou d'acide maléique (d'anhydride d'acide maléique).

4. L'utilisation des polyesters insaturés selon la revendication 1 ou 2, caractérisée par le fait que le composant acide est formé à raison de 40 à 60 mol% d'AIP et de 40 à 60 mol% d'acide fumarique et/ou d'acide maléique (d'anhydride d'acide maléique).

5. L'utilisation des polyesters insaturés selon la revendication 3 ou 4, caractérisée par le fait que le composant alcool est formé à raison de 40 à 90 mol% de NPG et de 10 à 60 mol% de CHDM et/ou d'un mélange technique de diols de la formule I.